# EUROPEAN PATENT SPECIFICATION

(11) **EP 2 386 342 B1**
(45) Date of publication and mention of the grant of the patent: **01.05.2013**
(21) Application number: 11165316.8
(22) Date of filing: 09.05.2011
(51) Int. Cl.: B01D 46/24, B01D 46/00

(54) **Composite air filtering and vacuum/pressure release device**
Kombinierte Luftfilterungs- und Vakuum- bzw. Druckablassvorrichtung
Dispositif composite de filtrage d'air et de libération de vide/pression

(30) Priority: 11.05.2010 GB 201007852
(43) Date of publication of application: 16.11.2011
(73) Proprietor: Russell-Lowe, Jeremy Nigel, Windlesham Surrey GU20 6AA (GB); Russell-Lowe, Douglas Michael, Windlesham Surrey GU20 6AA (GB)
(72) Inventor: Russell-Lowe, Jeremy Nigel, Windlesham Surrey GU20 6AA (GB); Russell-Lowe, Douglas Michael, Windlesham Surrey GU20 6AA (GB)
(74) Representative: Rickard, Timothy Mark Adrian

(56) References cited:
- DE-A1- 10 312 684
- US-A- 4 697 612
- US-A- 5 249 598
- US-A1- 2003 172 974
- US-B1- 6 866 056

## Description

This invention relates to a composite air filtering and vacuum/pressure release device. More especially but not exclusively the invention relates to a device for venting gases into or out of enclosed vessel for example when they are being filled or emptied or in response to temperature.

US 5 249 598 describes a bidirectional vent and overpressure relief valve. The valve comprises an arcuate diaphragm of resilient material having a slit in it. The diaphragm is urged against a seat by spring. Small pressure changes are equalised by passage of gas through the slit. Larger changes can be equalised in one direction by gas pressure overcoming the bias of the spring and urging the diaphragm from the seat.

US 6 866 056 describes a fuel tank vent that is provided with a filter.

As storage vessels storing liquid and semi-liquid material are emptied and filled air or other gas flows in and out. Changes in temperature of the gas or the contents also cause gas flow.

When vessels are cleaned using known cleaning regimes such as Cleaning in Place (CIP), steam or chemical solutions the cleaning process typically involves hot and cold phases which can cause even greater vacuum and pressure demand on the volume of a vessel such that a sudden demand of compensating gas is required to keep the vessel at equilibrium.

Contamination of a stored product can occur as air ingresses to replace the product volume when product is drawn off. A technically proven high efficiency air filter can be placed across the vessel vent so that all air passing into and out of the vessel passes through the filter media of the filter element removing as it does the potential for microbiological and other air borne contamination.

As air passes through a filter it experiences a resistance. As the demand for air through the filter increases the resistance to the passage of air increases causing a measurable pressure drop across the filter element.

This event can be compounded as the filter remains in service for longer periods because it increasingly occludes as it retains ever more atmospheric particles until eventually the resistance to the passage of air through the filter can become insufficient to replace the product volume being displaced in the vessel or other changes in volume.
Air filters will also become occluded when the vessel's product or other material overflows into the filter effectively reducing or blocking off the supply of air/gas.

It is a combination of the events described that can cause a vessel to experience mechanical failure due to over or under pressures.

The currently accepted method of protecting the vessel from microbiological infection is to fit a separate High Efficiency Air Filter and the accepted method of protecting the vessel for over and under pressure conditions caused by filter occlusion and changes in volume capacity is to fit a range of separate valves to the vessel to relieve the over pressure and vacuum conditions that build up in the vessel.

The currently available valves are expensive and complex and consist of a number of moving parts that are susceptible to sticking and need regular servicing and calibration. The currently available valves are separate from the filter system in that they are not an integral part of the filter element thus requiring additional vessel connections to be made to the vessel or alternatively connected in a stub pipe arrangement with numbers of opposing pipework configurations that are difficult to clean and make sterile.

The invention seeks to overcome this problem.

According to the invention there is provided a composite air filtering and vacuum/pressure wherein the relief of pressure/vacuum can be achieved as a consequence of the movement in operation of only one component as set forth in the claims.

According to the invention there is further provided a composite air filtering and vacuum/pressure release device comprising a filter cartridge and a pressure/vacuum release means characterised in that the pressure/vacuum release means comprises a static seat member and a diaphragm capable of flexing between a first configuration in which the seat member and the diaphragm form an air-tight seal, a second, pressure released, configuration in which the air tight seal is broken and a third, vacuum released, configuration in which the air tight seal is broken. Flexure between a configuration and a further configuration can be triggered by a predetermined pressure difference. Flexure between a configuration and a further configuration can be triggered by any pressure or vacuum for example a pressure difference in the range 100 to 1000Pa especially 200 to 900Pa such as about 750Pa. The diaphragm can be tapered and or grooved to reduce its resistance to flexing. The diaphragm is annular and the static seat member is an ellipsoid such as a sphere or a prolate ellipsoid. The filter cartridge can comprise a hollow cylinder having a longitudinal axis and the static seat member can be located on a seat member mounting disposed along the axis. The diaphragm can be mounted on a first end of the cylinder. The second end of the cylinder is provided with a base assembly for securing the composite device to a vessel. The outside of the filter can be provided with a weather-proof cover having at least one hole allowing ingress and egress of air. The invention further provides a filter cartridge for use in the composite device.

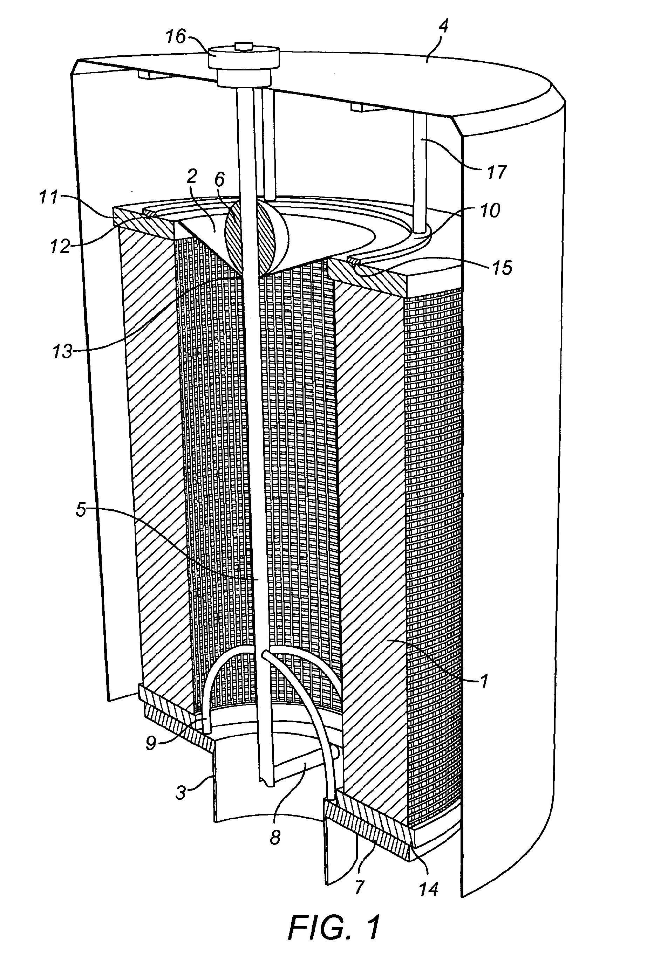

Embodiments of the invention will be described by reference to the accompanying figures of which
Figure 1 is a sectional view of a device of the invention with a diaphragm and seating member in a first configuration;
Figure 2 is a partial scrap section showing a diaphragm and seating member of use in the invention;
Figure 3 is a perspective view of a filter diaphragm and seat member of use in the invention in a first configuration;
Figure 4 is a perspective view of a filter diaphragm and seat member of use in the invention in a second configuration.
Figure 5 is a sectional view of a device of the invention with the diaphragm and seating member in a further configuration;

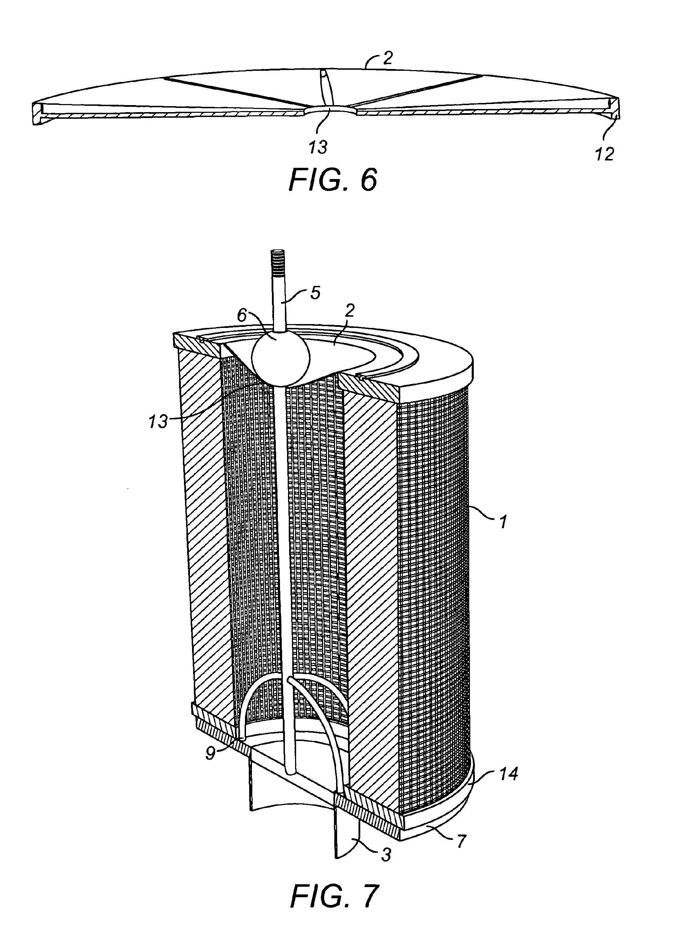

Figure 6 is a partial scrap view of a diaphragm of use in the invention; and
Figure 7 is a sectional view of a device of the invention with a diaphragm and seat member in a first configuration.

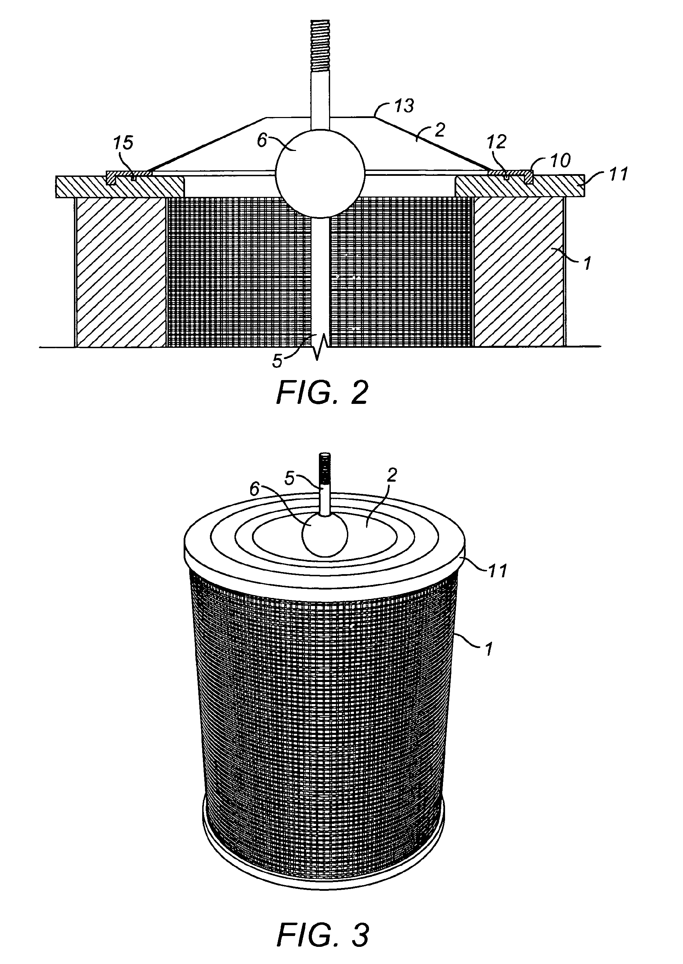

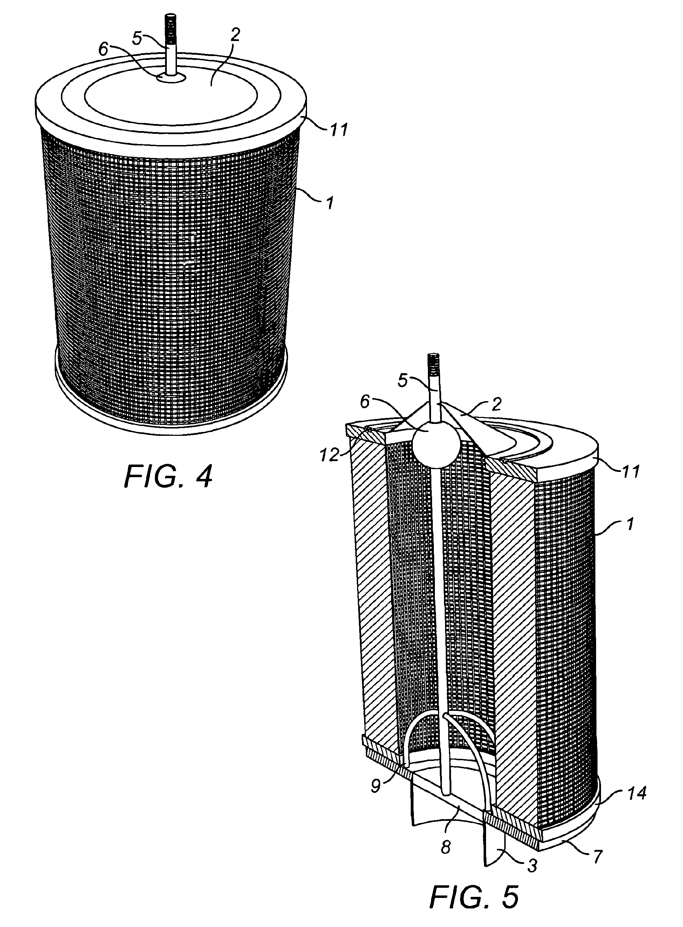

The illustrated embodiment of the invention provides an annular air filter 1 which may be of conventional type and of characterised efficiency. Received over an end of the annular filter is a resilient and elastic diaphragm 2 having a hole there through. The edges of the hole may be provided with a bead 13. Passing through the hole is seat mounting 5 which carries ellipsoid such as spherical static seat member 6. The surface of the static seat member 6 abuts in sealing engagement the diaphragm 2. Thus low pressure gas is not able to pass between the static seat member and the diaphragm. As the pressure differential across the diaphragm increases the sealing engagement will be broken. Thus if the pressure inside the annular space defined by the filter 1 is significantly less than the pressure above the diaphragm the diaphragm will be urged downwards away from the seat member allowing gas flow. Once the pressure has equalised the resilient bias of the diaphragm urges it back in sealing engagement with the seat member. Conversely if the pressure inside the annular gap defined by substantially exceeds the pressure above the diaphragm the diaphragm will be urged past the static seat member to the position shown in Figures 2 and 5. The pressure can then equalise and once it has done so the diaphragm once more abuts in sealing engagement the static seat member. Those skilled in the art will have no difficulty in providing relief at the desired pressure differential. Typically, but not essentially, relief is arranged to be at differentials less than 1000Pa, for example less than 900Pa, 700Pa, 500Pa, 200Pa or 100Pa. Routine experiment or computational techniques such as FEA will readily allow operation at the desired differential. By way of non-limiting example parameters which may have a bearing on the operational pressure differential are the nature and dimensions of the diaphragm and bead and the nature and dimensions of the static seat member.

The diaphragm 2 may taper in thickness or it may be of constant thickness. It may be provided with grooves. Grooving and tapering may allow the skilled worker to even more easily obtain the required resilience properties. The outer periphery of the diaphragm may be provided with a bead 12 which is received in a groove 15 of filter end cap 11. Annular plate 10 overlies the diaphragm allowing it to be secured in an air tight manner. This can be facilitated by providing a lip on the edge thereof. In an embodiment the diaphragm has a diameter of 250mm and a hole when the diaphragm is not under load of 20mm. The diaphragm tapers in thickness from the outer periphery from 1 to 0.5mm. The bead 12 may be 3x8mm.

In the illustrated embodiment the air filter is a hollow right circular cylinder but those skilled will have no difficulty in devising other suitable shapes. For example the filter could have a flow rate of 1000m³/h at an initial resistance of less than 150Pa with an efficiency at 1000m³/h of 99.999% when measured according to BS3928. While in the illustrated embodiment a single diaphragm is provided it is within the scope of the invention for the composite device to be provided with more. For example each end of the annular filter could be provided with a diaphragm and static seat member.

The filter housing may, but need not comprise two components. It can comprise a base assembly 3 for securing the device to the vessel and locating the diaphragm relative to the static seat member. The second component can be a cover portion 4 which may be cylindrical received over the filter. An extension of seat mounting 5 can have a threaded portion which passes through a hole in cover portion 4. A screw threaded fastener 16 can secure the cover portion 4 over the filter for example to weatherproof the filter. Spacer members 17 depending from the cover 4 urge the filter element 1 against its seat 14 on extension 7 of the base. Base assembly 3 carries, in the illustrated embodiment, the seat mounting 5 for example by cross member 8. In the illustrated embodiment base assembly 3 is provided with an arcuate, for example semi-circular, guide member 9 which extends over the hole communicating with the vessel to aid location of the filter on the base assembly and optionally to help support the seat mounting 5. In some embodiments two or more arcuate guide members are provided. This makes correct location of the air filter easier.

## Claims

1. A composite air filtering and vacuum/pressure release device comprising a filter cartridge (1) and a pressure/vacuum release means **characterised in that** the pressure/vacuum release means comprises a static seat member (6) and a diaphragm (2) capable of flexing between a first configuration in which the seat member and the diaphragm form an air-tight seal, a second, pressure released, configuration in which the air tight seal is broken and a third, vacuum released, configuration in which the air tight seal is broken and **in that** the diaphragm (2) is annular and the static seat member (6) is an ellipsoid such as a sphere or a prolate ellipsoid

2. A composite release device as claimed in claim 1 wherein flexure between a configuration and a further configuration is triggered by a predetermined pressure difference.

3. A composite release device as claimed in claim 1 or claim 2 wherein flexure between a configuration and a further configuration is triggered by a pressure difference in the range 100 to 1000Pa especially 200 to 900Pa.

4. A composite release device as claimed in any one of the preceding claims wherein the diaphragm (2) is grooved to reduce its resistance to flexing.

5. A composite device as claimed in any one of the preceding claims wherein the filtration cartridge (1) comprises a hollow cylinder having a longitudinal axis and the static seat member (6) is located on a seat member mounting (5) disposed along the axis.

6. A composite device as claimed in claim 5 wherein the diaphragm (2) is mounted on a first end of the cylinder.

7. A composite device as claimed in claim 6 wherein the second end of the cylinder is provided with a base assembly (3) for securing the composite device to a vessel.

8. A composite device as claimed in any one of the preceding claims wherein the outside of the filter is provided with a weather-proof cover (4) having at least one hole allowing ingress and egress of air.

9. A composite device as claimed in any one of the preceding claims wherein the relief of pressure/vacuum can be achieved as a consequence of the movement in operation of only one component.

## Patentansprüche

1. Zusammengesetzte Luftfilter-und-Unterdruck/Druck-Ablassvorrichtung, die eine Filterkartusche (1) und eine Druck/Unterdruck-Ablasseinrichtung umfasst, **dadurch gekennzeichnet, dass** die Druck/Unterdruck-Ablasseinrichtung ein statisches Sitzelement (6) sowie eine Membran (2) umfasst, die sich zwischen einer ersten Form, in der das Sitzelement und die Membran eine luftundurchlässige Dichtung bilden, einer zweiten Druckablass-Form, in der die luftundurchlässige Dichtung durchbrochen ist, und einer dritten Unterdruckablass-Form biegen kann, in der die luftundurchlässige Dichtung durchbrochen ist, und dadurch, dass die Membran (2) ringförmig ist und das statische Sitzelement (6) ein Ellipsoid, wie beispielsweise eine Kugel oder ein flacher Ellipsoid, ist.

2. Zusammengesetzte Ablassvorrichtung nach Anspruch 1, wobei Biegung zwischen einer Form und einer weiteren Form durch einen vorgegebenen Druckunterschied ausgelöst wird.

3. Zusammengesetzte Ablassvorrichtung nach Anspruch 1 oder Anspruch 2, wobei Biegung zwischen einer Form und einer weiteren Form durch einen Druckunterschied im Bereich von 100 bis 1000 Pa, insbesondere 200 bis 900 Pa, ausgelöst wird.

4. Zusammengesetzte Ablassvorrichtung nach einem der vorangehenden Ansprüche, wobei die Membran (2) genutet ist, um ihren Biegewiderstand zu verringern.

5. Zusammengesetzte Ablassvorrichtung nach einem der vorangehenden Ansprüche, wobei die Filterkartusche (1) einen hohlen Zylinder mit einer Längsachse umfasst und sich das statische Sitzelement (6) an einer Sitzelement-Halterung (5) befindet, die entlang der Achse angeordnet ist.

6. Zusammengesetzte Vorrichtung nach Anspruch 5, wobei die Membran (2) an einem ersten Ende des Zylinders angebracht ist.

7. Zusammengesetzte Vorrichtung nach Anspruch 6, wobei das zweite Ende des Zylinders mit einer Sockelanordnung (3) zum Befestigen der zusammengesetzten Vorrichtung an einem Behälter versehen ist.

8. Zusammengesetzte Vorrichtung nach einem der vorangehenden Ansprüche, wobei die Außenseite des Filters mit einer wetterfesten Abdeckung (4) versehen ist, die wenigstens ein Loch hat, das Eintreten und Austreten von Luft ermöglicht.

9. Zusammengesetzte Vorrichtung nach einem der vorangehenden Ansprüche, wobei das Ablassen von Druck/Unterdruck infolge der Bewegung nur einer Komponente beim Betrieb erzielt werden kann.

## Revendications

1. Dispositif composite de filtrage d'air et de libération de vide/pression comprenant une cartouche de filtre (1) et des moyens de libération de vide/pression **caractérisé en ce que** les moyens de libération de vide/pression comprennent un élément de siège statique (6) et un diaphragme (2) pouvant fléchir entre une première configuration dans lequel l'élément de siège et le diaphragme forment un joint étanche à l'air, une seconde configuration, à pression libérée, dans laquelle le joint étanche à l'air est rompu et une troisième configuration, à vide libéré, dans laquelle le joint étanche à l'air est rompu et **en ce que** le diaphragme (2) est annulaire et l'élément de siège statique (6) est un ellipsoïde comme une sphère ou un ellipsoïde allongé.

2. Dispositif de libération composite selon la revendication 1 dans lequel un fléchissement entre une configuration et une autre configuration est déclenché par une différence de pression prédéterminée.

3. Dispositif de libération composite selon la revendication 1 ou la revendication 2 dans lequel un fléchissement entre une configuration et une autre configuration est déclenché par une différence de pression dans une plage de 100 à 1000 Pa, spécialement de 200 à 900 Pa.

4. Dispositif de libération composite selon l'une quelconque des revendications précédentes dans lequel le diaphragme (2) est rainuré pour réduire sa résistance au fléchissement.

5. Dispositif de libération composite selon l'une quelconque des revendications précédentes dans lequel la cartouche de filtre (1) comprend un cylindre creux ayant un axe longitudinal et l'élément de siège statique (6) est situé sur une tige d'élément de siège (5) disposée le long de l'axe.

6. Dispositif de libération composite selon la revendication 5 dans lequel le diaphragme (2) est monté sur une première extrémité du cylindre.

7. Dispositif composé selon la revendication 6 dans lequel la seconde extrémité du cylindre est pourvue d'un assemblage de base (3) pour fixer le dispositif composé sur un récipient.

8. Dispositif composé selon l'une quelconque des revendications précédentes dans lequel l'extérieur du filtre est pourvu d'un couvercle de protection contre les intempéries (4) comportant au moins un trou permettant de faire entrer et expulser de l'air.

9. Dispositif composé selon l'une quelconque des revendications précédentes dans lequel la libération de pression/vide peut être obtenue comme une conséquence du mouvement en fonctionnement de seulement un composant.
